# EUROPÄISCHE PATENTSCHRIFT

(11) **EP 2 197 634 B1**
(45) Veröffentlichungstag und Bekanntmachung des Hinweises auf die Patenterteilung: **25.01.2012**
(21) Anmeldenummer: 08854372.3
(22) Anmeldetag: 13.11.2008
(51) Int. Cl.: B25J 17/02

(54) **ROBOTER MIT DELTA-KINEMATIK**
ROBOT WITH DELTA KINEMATICS
ROBOT À CINÉMATIQUE DELTA

(30) Priorität: 29.11.2007 DE 102007057527; 15.02.2008 DE 102008009328
(43) Veröffentlichungstag der Anmeldung: 23.06.2010
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2008/009601
(87) Internationale Veröffentlichungsnummer: WO 2009/068189

(56) Entgegenhaltungen:
- EP-A- 1 293 691
- EP-A- 1 854 591
- WO-A-01/60571
- DE-A1-102005 042 031
- DE-B- 1 279 907
- US-A1- 2004 143 876
- US-A1- 2005 177 279

## Beschreibung

Die Erfindung betrifft einen Roboter mit Delta-Kinematik.

Roboter gemäß dem Oberbegriff des Anspruchs 1 sind beispielsweise in EP 1 293 691 A1, EP 1 854 591, WO 01/60571 A1 oder US 2004/0143876 A1 beschrieben.

Ein nach dem Delta-Prinzip arbeitender Roboter, welcher auch als Delta-Roboter oder als Parallelroboter bezeichnet wird, ist grundsätzlich bekannt und wird, beispielsweise im Bereich der Lebensmittelindustrie, zur schnellen und präzisen Positionierung von leichten Gegenständen, wie z.B. Lebensmittelportionen, mittels Vakuumsaugern oder Greifern eingesetzt. Ein besonderer Vorteil der Delta-Kinematik liegt in der hohen Dynamik und in der besonderen Genauigkeit, mit welcher Positionen angefahren werden können.

Ein Delta-Roboter umfasst typischerweise eine meist ortsfest angeordnete Roboterbasis und eine relativ zu der Roboterbasis bewegbare Werkzeugaufnahme, an welcher ein an den jeweiligen Anwendungsbereich angepasstes Werkzeug, z.B. ein Greifer, angebracht ist. Die Werkzeugaufnahme ist mittels dreier motorisch angetriebener, bewegbarer Steuerarme mit der Roboterbasis verbunden. Jeder Steuerarm umfasst einen an der Roboterbasis befestigten oberen Armabschnitt und einen an den oberen Armabschnitt angelenkten und zu der Werkzeugaufnahme führenden unteren Armabschnitt.

Zum Verdrehen eines an der Werkzeugaufnahme angebrachten Werkzeugs um seine Achse ist typischerweise ein Drehantrieb im Bereich der Roboterbasis ortsfest angeordnet, dessen Drehmoment zu der bewegbaren Werkzeugaufnahme übertragen werden muss.

Bekannte Delta-Roboter weisen hierfür eine Teleskopachse auf, die auch als vierte Achse bezeichnet wird. Die Drehmomentübertragung erfolgt dabei mittels einer Vielkeilwelle oder durch eine seitlich versetzte Anordnung von Profilelementen. Beide Lösungen zeichnen sich dadurch aus, dass die Drehmomenteinleitung in die Teleskopachse über ein mit der Roboterbasis fest verbundenes, gelenkig gelagertes Ende eines ersten Teils eines Schiebesitzes stattfindet, während die Drehmomentausleitung über ein relativ zu dem ersten Teil verschiebbares zweites Teil des Schiebesitzes erfolgt, welches an der Werkzeugaufnahme angebracht ist.

Diese Einrichtungen zur Übertragung von Drehmoment sind verschleißanfällig und lediglich zur Übertragung kleinerer Drehmomente geeignet. Ferner führt eine Reduzierung des notwendigerweise vorhandenen Spiels in der Drehmomentübertragungseinrichtung zwangsläufig zu Schwergängigkeiten des Gesamtsystems.

Der Erfindung liegt die Aufgabe zugrunde, einen Delta-Roboter mit einer Drehmomentübertragungseinrichtung zu schaffen, die bei möglichst geringem Gewicht, hoher Genauigkeit und guter Eignung für hygienesensitive Anwendungen gleichzeitig allen kinematischen Anforderungen entsprechen kann.

Zur Lösung der Aufgabe ist ein Roboter mit den Merkmalen des Anspruchs 1 vorgesehen.

Der erfindungsgemäße Delta-Roboter besitzt eine Roboterbasis und eine Werkzeugaufnahme, welche durch eine längenvariable und winkelvariable Einrichtung zur Übertragung von Drehmoment verbunden sind, die über die Roboterbasis antreibbar ist und mittels der ein an der Werkzeugaufnahme angebrachtes Werkzeug verdrehbar ist.

Die Drehmomentübertragungseinrichtung zeichnet sich durch eine besonders einfache und leicht zu reinigende Konstruktion mit minimalen zu bewegenden Massen aus. Dadurch ist der erfindungsgemäße Delta-Roboter nicht nur besonders verschleißresistent, sondern auch besonders hygienisch. Er eignet sich folglich besonders gut für Anwendungen, die hohe Anforderungen an die Hygiene stellen, wie z.B. Lebensmittelanwendungen.

Erfindungsgemäß umfasst die Einrichtung zur Übertragung von Drehmoment ein biegesteifes, relativ zur Roboterbasis verschiebbares Übertragungsorgan. Durch die Verschiebbarkeit des Übertragungsorgans relativ zur Roboterbasis braucht das Übertragungsorgan nicht längenverstellbar oder teleskopartig ausgebildet zu sein, um einen Längenausgleich bei einer Bewegung der Werkzeugaufnahme in Richtung der Roboterbasis oder von dieser weg zu schaffen. Stattdessen kann das Übertragungsorgan eine fixe Länge aufweisen. Eine Verschiebung des Übertragungsorgans relativ zur Roboterbasis bewirkt letztlich nur eine Veränderung der effektiven Länge des Übertragungsorgans, d.h. also eine Änderung der Länge des sich zwischen der Roboterbasis und der Werkzeugaufnahme erstreckenden Abschnitts des Übertragungsorgans, nicht aber des Übertragungsorgans selbst. Durch den Einsatz eines Übertragungsorgans fester Länge ist die Konstruktion der Drehmomentübertragungseinrichtung und somit auch des Roboters insgesamt erheblich vereinfacht.

Das relativ zur Roboterbasis verschiebbare Übertragungsorgan ist als ein drehangetriebenes Rohr ausgebildet, welches beispielsweise aus Metall oder Kunststoff gebildet sein kann.

Zum wirksamen Ausgleichen einer Bewegung der Werkzeugaufnahme, z.B. eines Versatzes oder einer Verkippung der Werkzeugaufnahme, sind das Rohr und ein Drehantrieb zum Antreiben des Rohrs mittels einer kardanischen Anbringung an der Roboter basis gelagert. Eine derartige kardanische Anbringung weist einen inneren Kardanring auf, der um eine erste Drehachse verdrehbar an einem äußeren Kardanring gelagert ist, welcher seinerseits um eine zur ersten Drehachse rechtwinklig angeordnete zweite Drehachse verdrehbar an der Roboterbasis gelagert ist. Der innere Kardanring trägt ein mit dem Rohr in Eingriff stehendes Hohlwellengetriebe, welches durch einen Motor antreibbar ist.

Anstelle eines Kardangelenks können alternativ auch andere Formen von sphärischen Lagern zum Einsatz kommen, beispielsweise homokinetische Getriebe oder Gleichlauf-Verschiebegelenke.

Durch ein zwischen die Drehmomentübertragungseinrichtung und das Werkzeug geschaltetes Getriebe kann darüber hinaus eine besonders hohe Präzision der Drehbewegung des Werkzeugs ermöglicht werden.

Gemäß einer Ausführungsform, welche nicht unter die Erfindung fällt, umfasst die Einrichtung zur Übertragung von Drehmoment eine biegsame Antriebswelle. Durch die Biegsamkeit der Antriebswelle und die daraus resultierende Flexibilität der Drehmomentübertragungseinrichtung kann sowohl der Längen- als auch der Winkelausgleich vorgenommen werden, welcher bei einer Verfahrbewegung und/oder Verkippung der Werkzeugaufnahme nötig ist.

Im Bereich ihres basisseitigen Endes ist die biegsame Antriebswelle vorzugsweise mit einem an der Roboterbasis angebrachten bzw. in dieser untergebrachten Drehantrieb gekoppelt. Im Bereich ihres abtriebsseitigen Endes ist die Antriebswelle mittels einer einfachen Lagerung in der Werkzeugaufnahme, insbesondere in einer Gelenkplatte der Werkzeugaufnahme, gelagert.

Die biegsame Antriebswelle umfasst vorteilhafterweise eine torsionssteife, biegsame Drahtseele, welche zum Schutz der Drahtseele und/oder aus hygienischen Gründen mit einer ebenfalls torsionssteifen, biegsamen Ummantelung versehen sein kann.

Gemäß einer weiteren Ausführungsform, welche nicht unter die Erfindung fällt, umfasst die Einrichtung zur Übertragung von Drehmoment ein biegesteifes, in der Länge veränderliches Übertragungsorgan. Im Unterschied zu den vorherigen Ausführungsformen handelt es sich bei diesem Übertragungsorgan um eine teleskopartige Drehmomentübertragungseinrichtung, welche ihre tatsächliche Länge verändern kann.

Das Übertragungsorgan kann eine drehfeste Schiebeverbindung zwischen einem Eingangsteil und einem Ausgangsteil umfassen. Um eine möglichst ausgewogene Kraftübertragung zu gewährleisten, fallen eine Drehachse des Eingangsteils und eine Drehachse des Ausgangsteils vorzugsweise zusammen.

Des Weiteren kann der eine Teil eine Schubstange mit einem von einer Kreisform abweichenden Querschnitt und der andere Teil eine als Schiebesitz für die Schubstange ausgebildete offene Rahmenkonstruktion sein. Eine derartige teleskopartige Drehmomentübertragungseinrichtung ermöglicht nicht nur die Übertragung von höheren Drehmomenten, sondern sie ist auch von außen gut zugänglich, d.h. es gibt keine Hohlräume, die nicht einzusehen sind. Die Drehmomentübertragungseinrichtung ist folglich besonders leicht zu reinigen und somit besonders hygienisch.

Um eine Bewegung und insbesondere Verkippung der Werkzeugaufnahme relativ zu der Roboterbasis zu erleichtern, kann die Einrichtung zur Übertragung von Drehmoment grundsätzlich bei allen drei Ausführungsformen gelenkig mit der Roboter basis und/oder der Werkzeugaufnahme verbunden sein. Umfasst die Drehrnornentübertsagungseinrichtung eine biegsame Antriebswelle (erste Ausführungsform), so kann auf eine derartige gelenkige Verbindung jedoch auch verzichtet werden, da in diesem Fall eine Verfahrbewegung bzw. Verkippbewegung der Werkzeugaufnahme relativ zur Roboter basis durch die Flexibilität der Antriebswelle ausgeglichen wird.

Zur gelenkigen Verbindung zwischen Drehmomentübertragungseinrichtung und Roboter basis bzw. Werkzeugäufnahme kann beispielsweise ein Kardangelenk oder ein sphärisches Gelenk vorgesehen sein.

Wie bereits erwähnt, kann die Werkzeugaufnahme eine Gelenkplatte umfassen, an der ein Werkzeug, beispielsweise ein an die jeweilige Anwendung angepasster Greifer, drehbar angebracht oder anbringbar ist.

Nachfolgend wird die Erfindung rein beispielhaft anhand vorteilhafter Ausführungsformen unter Bezugnahme auf die beigefügte Zeichnung beschrieben. Es zeigen:
- Fig. 1: (a) eine schematische Darstellung eines Roboters gemäß einer nicht unter die Erfindung fallenden Ausführungsform mit einer Drehmomentübertragungseinrich- tung, welche eine biegsame Antriebswelle umfasst, und (b) eine Ausschnittsvergrößerung der Antriebswelle;
- Fig. 2: (a) eine Längsschnittsansicht einer kardanischen Lagerung einer ein längenfestes Rohr umfassenden Drehmomentübertragungseinrichtung an einer Roboterbasis eines erfindungsgemäßen Roboters und (b) eine Querschnittsansicht der kardanischen Lagerung; und
- Fig. 3: ein teleskopartiges Übertragungsorgan einer Drehmomentübertragungseinrichtung eines Roboters gemäß einer weiteren Ausführungsform, welche nicht unter die Erfindung fällt.

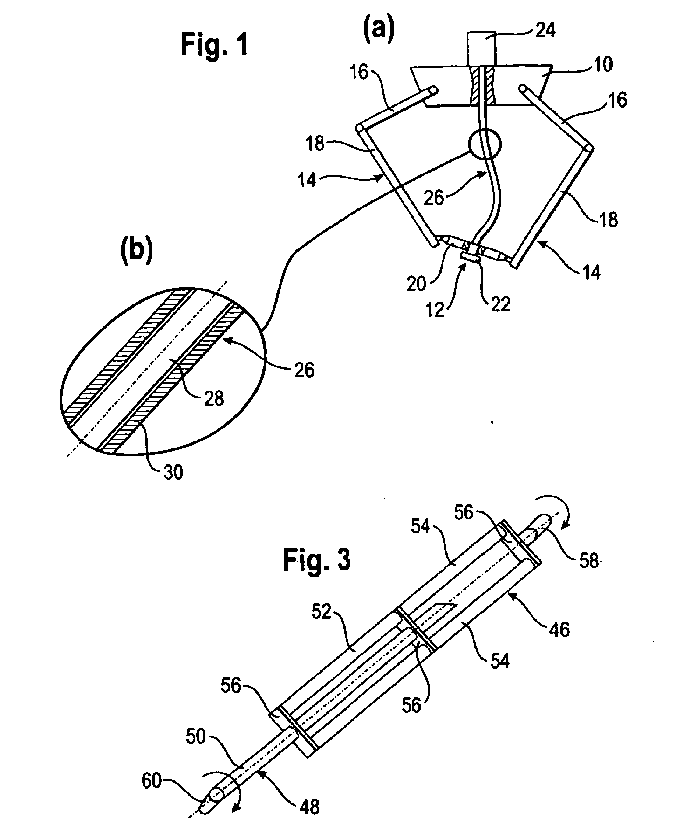

In Fig. 1 ist eine nicht unter die Erfindung fallende Ausführungsform eines Roboters mit Delta-Kinematik dargestellt, welcher auch als Delta-Roboter oder Parallelroboter bezeichnet wird.

Der Roboter umfasst eine zumeist ortsfest angeordnete Roboterbasis 10 und eine relativ zu der Roboterbasis 10 bewegbare Werkzeugaufnahme 12. Die Roboterbasis 10 und die Werkzeugaufnahme 12 sind durch drei zueinander gleich beabstandete Steuerarme 14 miteinander verbunden, von denen in Fig. 1a lediglich zwei dargestellt sind. Jeder Steuerarm 14 weist einen an der Roboterbasis 10 verschwenkbar gelagerten und motorisch angetriebenen oberen Armabschnitt 16 und einen mit diesem gelenkig verbundenen unteren Armabschnitt 18 auf.

Die Werkzeugaufnahme 12 umfasst eine mit den unteren Armabschnitten 18 gelenkig verbundene Gelenkplatte 20, an der ein Werkzeughalter 22 für z.B. einen Greifer drehbar angebracht ist.

Die Verdrehung des Werkzeughalters 22 erfolgt mittels eines an der Roboterbasis 10 angebrachten Drehantriebs 24. In Fig. 1a ist der Drehantrieb 24 auf der Roboterbasis 10 sitzend gezeigt, grundsätzlich kann der Drehantrieb 24 aber auch in der Roboterbasis 10 untergebracht sein.

Zur Übertragung eines Drehmoments von dem Drehantrieb 24 auf den Werkzeughalter 22 ist eine Drehmomentübertragungseinrichtung vorgesehen, die im vorliegenden Ausführungsbeispiel eine biegsame Antriebswelle 26 umfasst.

Wie der Ausschnittsvergrößerung in Fig. 1b zu entnehmen ist, weist die biegsame Antriebswelle 26 eine torsionssteife, biegsame Drahtseele 28 auf, die von einer ebenfalls torsionssteifen und biegsamen Ummantelung 30 umgeben ist.

Im Bereich ihres antriebsseitigen Endes ist die Antriebswelle 26 mit dem Drehantrieb 24 gekoppelt, um durch diesen in Drehung versetzt zu werden. Im Bereich ihres abtriebsseitigen Endes ist die Antriebswelle 26 mittels einer einfachen Lagerung in der Gelenkplatte 20 gelagert und drehfest mit dem Werkzeughalter 22 verbunden.

Zur Erreichung einer besonders präzisen Verdrehung des Werkzeughalters 22 kann ein (nicht gezeigtes) Getriebe zwischen die Antriebswelle 26 und den Werkzeughalter 22 geschaltet sein.

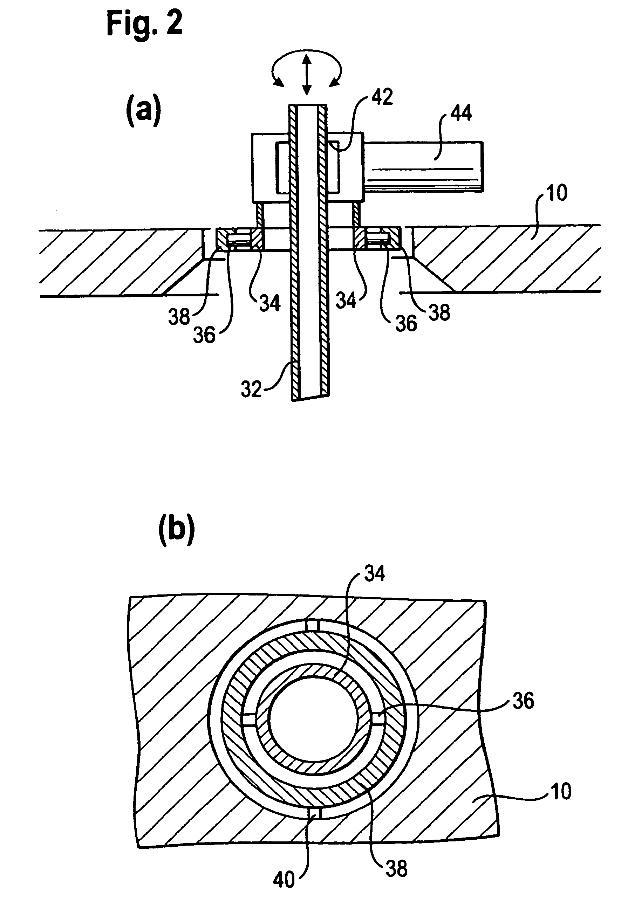

In Fig. 2a ist ein Ausschnitt eines erfindungsgemäßen Delta-Roboters gezeigt, welcher sich von dem voranstehend beschriebenen Roboter lediglich in der Ausbildung der Drehmomentübertragungseinrichtung unterscheidet.

So weist die Drehmomentübertragungseinrichtung des Roboters gemäß der in Fig. 2a gezeigten Ausführungsform keine biegsame Antriebswelle 26, sondern stattdessen ein steifes Rundrohr 32 mit fester Länge auf, welches ähnlich wie die biegsame Antriebswelle 26 drehfest oder über ein Getriebe mit dem Werkzeughalter 22 verbunden ist. Zusätzlich kann ein Kardangelenk zwischen das Rundrohr 32 und die Werkzeugaufnahme 12 geschaltet sein.

Das Rundrohr 32 ist verschiebbar in der Roboterbasis 10 gelagert, um einen Längenausgleich zu schaffen, wenn sich bei einer Bewegung der Werkzeugaufnahme 12 relativ zu der Roboterbasis 10 der Abstand zwischen der Werkzeugaufnahme 12 und der Roboterbasis 10 ändert.

Um zusätzlich einen gegebenenfalls erforderlichen Winkelausgleich zu schaffen, handelt es sich bei der Lagerung des Rundrohrs 32 in der Roboterbasis 10 um eine kardanische Lagerung (Fig. 2b). Die kardanische Lagerung umfasst einen inneren Kardanring 34, der um eine zum Rundrohr 32 rechtwinklig verlaufende erste Drehachse 36 an einem äußeren Kardanring 38 drehbar gelagert ist. Der äußere Kardanring 38 ist seinerseits um eine zweite Drehachse 40 drehbar an der Roboterbasis 10 gelagert, wobei die zweite Drehachse 40 sowohl zu dem Rundrohr 32 als auch zu der ersten Drehachse 36 rechtwinklig verläuft.

Auf dem inneren Kardanring 34 ist ein mit dem Rundrohr 32 in Eingriff stehendes Hohlwellengetriebe 42 aufgebaut, welches durch einen Motor 44 antreibbar ist (Fig. 2a). Durch eine Drehung einer Getriebehohlachse des Hohlwellengetriebes 42 wird das Drehmoment des Motors 44 auf das Rundrohr 32 übertragen. Dieses kann sich, z.B. mittels Kugelbuchsen, relativ zu dem Hohlwellengetriebe 42 und somit zu der Roboterbasis 10 in der Getriebehohlachse verschieben.

In Fig. 3 ist ein Drehmomentübertragungsorgan eines Delta-Roboters gemäß einer weiteren, nicht unter die Erfindung fallenden Ausführungsform dargestellt, welches anstelle der biegsamen Antriebswelle 26 oder des Rundrohrs 32 zur Übertragung von Drehmoment von dem Drehantrieb 24 zu dem Werkzeughalter 22 verwendet werden kann.

Bei dem in Fig. 3 gezeigten Drehmomentübertragungsorgan handelt es sich um eine biegesteife, in der Länge veränderliche Schiebevorrichtung, die ein Eingangsteil 46 und ein Ausgangsteil 48 umfasst, welches mit dem Eingangsteil 46 drehfest und verschiebbar verbunden ist.

Dabei ist das eine Teil, im vorliegenden Ausführungsbeispiel das Ausgangsteil 48, durch eine Schubstange 50 mit einem von einer Kreisform abweichenden Querschnitt und das andere Teil, im vorliegenden Ausführungsbeispiel das Eingangsteil 46, durch eine als Schiebesitz für die Schubstange wirkende offene Rahmenkonstruktion 52 gebildet.

Die Rahmenkonstruktion 52 setzt sich aus zwei stangenartigen und parallel zur Schubstange 50 verlaufenden Führungselementen 54 und drei zueinander beabstandet angeordneten und die Führungselemente 54 miteinander verbindenden Querstreben 56 zusammen.

Die Schubstange 50 erstreckt sich durch zwei der Querstreben 56 hindurch, welche zu diesem Zweck jeweils eine Öffnung aufweisen, deren Querschnitt an den Querschnitt der Schubstange 50 angepasst ist, um eine Verdrehung der Schubstange 50 relativ zu der Rahmenkonstruktion 52 zu verhindern und somit eine optimale Drehmomentübertragung von dem Eingangsteil 46 auf das Ausgangsteil 48 zu gewährleisten.

Dabei ist die Schubstange 50 derart in der Rahmenkonstruktion 52 gelagert, dass die Drehachse des Eingangsteils 46 und die Drehachse des Ausgangsteils 48 bei der Übertragung eines Drehmoments von dem Drehantrieb 24 zu dem Werkzeughalter 22 zusammenfallen.

Das Eingangsteil 46 ist über ein Gelenkstück 58 mit dem Drehantrieb 24 gekoppelt. Entsprechend ist das Ausgangsteil 48 über ein Gelenkstück 60 mit der Werkzeugaufnahme 12 gekoppelt. Wie bei den voranstehend erläuterten Ausführungsformen kann auch hier die Verbindung zwischen Drehmomentübertragungsorgan und Werkzeughalter 22 direkt oder alternativ über ein zwischengeschaltetes Getriebe erfolgen.

### Bezugszeichenliste

- 10: Roboterbasis
- 12: Werkzeugaufnahme
- 14: Steuerarm
- 16: oberer Armabschnitt
- 18: unterer Armabschnitt
- 20: Gelenkplatte
- 22: Werkzeughalter
- 24: Drehantrieb
- 26: Antriebswelle
- 28: Drahtseele
- 30: Ummantelung
- 32: Rundrohr
- 34: innerer Kardanring
- 36: erste Drehachse
- 38: äußerer Kardanring
- 40: zweite Drehachse
- 42: Hohlwellengetriebe
- 44: Motor
- 46: Eingangsteil
- 48: Ausgangsteil
- 50: Schubstange
- 52: Rahmenkonstruktion
- 54: Führungselement
- 56: Querstrebe
- 58: Gelenkstück
- 60: Gelenkstück

## Patentansprüche

1. Roboter mit Delta-Kinematik,
dessen Werkzeugaufnahme (12) und Roboterbasis (10) durch eine längenvariable und winkelvariable Einrichtung (32) zur Übertragung von Drehmoment verbunden sind, die über die Roboterbasis (10) antreibbar ist und mittels der ein an der Werkzeugaufnahme (12) angebrachtes Werkzeug verdrehbar ist,
**dadurch gekennzeichnet,**
**dass** die Einrichtung zur Übertragung von Drehmoment ein biegesteifes, relativ zur Roboterbasis (10) verschiebbares und drehangetriebenes Rohr (32) umfasst, welches mittels einer kardanischen Lagerung in der Roboterbasis (10) gelagert ist und welches mit einem Hohlwellengetriebe (42) in Eingriff steht, das auf einem inneren Kardanring (34) der kardanischen Lagerung aufgebaut ist.

2. Roboter nach einem der vorhergehenden Ansprüche,
**dadurch gekennzeichnet,**
**dass** die Einrichtung zur Übertragung von Drehmoment (32) mit der Werkzeugaufnahme (12) gelenkig verbunden ist.

3. Roboter nach Anspruch 2,
**dadurch gekennzeichnet,**
**dass** als eine gelenkige Verbindung ein Kardangelenk oder ein sphärisches Gelenk vorgesehen ist.

4. Roboter nach einem der vorhergehenden Ansprüche,
**dadurch gekennzeichnet ,**
**dass** die Werkzeugaufnahme (12) eine Gelenkplatte (20) umfasst, an der ein Werkzeug, insbesondere ein Greifer, drehbar angebracht oder anbringbar ist.

5. Roboter nach einem der vorhergehenden Ansprüche,
**dadurch gekennzeichnet**-,
dass ein Getriebe zwischen das Werkzeug und die Einrichtung zur Übertragung von Drehmoment geschaltet ist.

## Claims

1. A robot having delta kinematics,
whose tool mount (12) and robot base (10) are connected by a length-variable and angle-variable device (32) for transferring torque which can be driven via the robot base (10) and which can be rotated by means of which a tool attached to the tool mount (12) can be rotated,
**characterised in that**
the device for transferring torque includes a rotationally driven tube (32) which has bending stiffness, is displaceable relative to the robot base (10), is supported in the robot base (10) by means of a gimbal support and is in engagement with a hollow shaft transmission (42) which is installed on an inner gimbal (34) of the gimbal support.

2. A robot in accordance with the preceding claim,
**characterised in that**
the device for transferring torque (32) is pivotally connected to the tool mount (12).

3. A robot in accordance with claim 2,
**characterised in that**
a gimbal joint or a spherical joint is provided as a pivotal connection.

4. A robot in accordance with any one of the preceding claims,
**characterised in that**
the tool mount (12) includes a hinged plate (20) to which a tool, in particular a gripper, is rotatably attached or attachable.

5. A robot in accordance with any one of the preceding claims,
**characterised in that**
a transmission is connected between the tool and the device for transferring torque.

## Revendications

1. Robot à cinématique delta,
dans lequel le récepteur d'outil (12) et la base de robot (10) sont reliés par un système à longueur variable et à angle variable (32) pour la transmission d'un couple de rotation, lequel système peut être entraîné via la base de robot (10) et un outil monté sur le récepteur d'outil (12) peut être mis en rotation au moyen de ce système,
**caractérisé en ce que**
le système pour la transmission d'un couple de rotation comprend un tube (32) rigide en flexion, capable de translation par rapport à la base de robot (10) et entraîné en rotation, lequel est monté dans la base de robot (10) au moyen d'un montage à la cardan et se trouve en engagement avec un mécanisme à arbre creux (42) qui est assemblé sur une bague de cardan intérieure (34) du montage à la cardan.

2. Robot selon l'une des revendications précédentes,
**caractérisé en ce que** le système pour la transmission d'un couple de rotation (32) est relié de façon articulée avec le récepteur d'outil (12).

3. Robot selon la revendication 2,
**caractérisé en ce qu'**il est prévu à titre de liaison articulée une articulation à la cardan ou une articulation sphérique.

4. Robot selon l'une des revendications précédentes,
**caractérisé en ce que** le récepteur d'outil (12) comprend une plaque d'articulation (20) sur laquelle un outil, en particulier un outil de préhension, est monté ou susceptible d'être monté en rotation.

5. Robot selon l'une des revendications précédentes,
**caractérisé en ce qu'**un mécanisme est interposé entre l'outil et le système pour la transmission d'un couple de rotation.
